## Europäisches Patentamt

## European Patent Office

## Office européen des brevets

(11) Publication number: **0 135 492
B1**

# (12) EUROPEAN PATENT SPECIFICATION

(45) Date of publication of patent specification: **02.12.87**

(21) Application number: **84870121.5**

(22) Date of filing: **20.08.84**

(51) Int. Cl.⁴: **C 08 L 35/06,** C 08 L 55/02, C 08 L 69/00

(54) Polyblends of styrene-maleic anhydride-methyl methacrylate terpolymers, acrylonitrile-butadiene-styrene polymers and polycarbonates.

(30) Priority: **22.08.83 US 524944**

(43) Date of publication of application:
**27.03.85 Bulletin 85/13**

(45) Publication of the grant of the patent:
**02.12.87 Bulletin 87/49**

(84) Designated Contracting States:
**BE FR GB IT**

(56) References cited:
**US-A-4 329 272**

(73) Proprietor: **MONSANTO COMPANY**
**Patent Department 800 North Lindbergh
Boulevard
St. Louis, Missouri 63166 (US)**

(72) Inventor: **Jones, William Jacob
158 Central Park Drive
Holyoke Massachusetts 01040 (US)**
Inventor: **Mendelson, Robert Allen
16 Riverwood
South Hadley Massachusetts 01075 (US)**

(74) Representative: **McLean, Peter et al
Monsanto Europe S.A. Patent Department
Avenue de Tervuren 270-272 Letter Box No 1
B-1150 Brussels (BE)**

Courier Press, Leamington Spa, England.

**0 135 492**

**Description**

Background of the invention

This invention relates to polyblends and specifically to polyblends of styrene-maleic anhydridemethyl methacrylate (SMAMMA) terpolymers, acrylonitrile-butadiene-styrene (ABS) polymers and polycarbonates (PC) with the methyl methacrylate termonomers conferring improved impact properties on the styrene maleic anhydride (SMA) polymers and blends thereof with ABS and PC.

SMA polymers of the type described herein and blends of the SMA polymers with ABS polymers and PC are useful as molding and extrusion compounds. Certain end-use applications require impact strengths above those obtained with SMA polymers and blends thereof with ABS and PC. Examples of such applications include the dashboard and instrument panels in automobiles, appliance housings and smaller molded parts for various uses. Other properties of the molded objects, such as Vicat softening temperature and tensile strength, should be maintained within useful ranges.

The present invention provides a means of improving the impact properties of SMA polymers and blends thereof with ABS and PC by using methyl methacrylate termonomer in the SMA polymer while maintaining other physical properties within useful ranges.

Description of the prior art

Polyblends of SMA and ABS type polymers are described in U.S.P. 4,197,376 and 4,305,869. Polyblends of SMA, ABS and PC are described in U.S.P. 4,218,544 and 4,367,310. Polyblends of SMA-acrylonitrile, ABS and PC are described in 4,205,140.

Summary of the invention

The present invention provides a polyblend comprising:

A. from 5 to 70% by weight of a polymer of a vinylaromatic monomer (e.g. styrene) and an unsaturated dicarboxylic acid anhydride monomer (e.g. maleic anhydride) and a termonomer selected from the group consisting of $C_1$ to $C_3$ acrylates and methacrylates wherein the relative amounts by weight of the monomers in the polymer are 50 to 84% of the vinyl-aromatic monomer, 15 to 35% of the dicarboxylic acid anhydride and 1 to 25% (preferably 5 to 20% and more preferably 10 to 20%) of the termonomer; and wherein the monomers are polymerized in the presence of 0 to 25% (preferably 5% to 25%) by weight of a rubber having a glass transition temperature below 0°C.; and

B. From 5 to 70% by weight of a grafted composition comprising a graft polymer of from 20 to 40 parts by weight of a monomer selected from the group consisting of methyl methacrylate and acrylonitrile and 80 to 60 parts by weight of a vinyl aromatic monomer the polymer being grafted onto a substrate rubber having a glass transition temperature below 0°C. wherein the monomers are polymerized in the presence of and grafted onto the substrate rubber, wherein the weight percent of the rubber is in the range from 5 to 60% by weight based on the weight of the composition;

C. from 5 to 70% of polycarbonate; and wherein the weight percent for Components A, B, and C is based on the total amount of Components (A), (B), and (C) in the polyblend.

Preferably the weight ratio of component A to component B is from 20:80 to 80:20, more preferably from 30:70 to 70:30.

Component A of the above formulation is preferably a styrene-maleic anhydride methyl methacrylate terpolymer. The styrene may be replaced in whole or in part by other vinylaromatic monomers, such as alphamethyl styrene, chloro-styrene, bromostyrene, p-methyl styrene and vinyl toluene. Similarly the maleic anhydride can be replaced in whole or in part by another unsaturated dicarboxylic anhydride such as itaconic, aconitic or citraconic anhydride. Similarly, the methyl methacrylate can be replaced in whole or in part by other $C_1$ to $C_3$ alkyl acrylates.

The proportions of the monomers in Component A preferably employed provide an anhydride content of from 15 to 30% by weight and a methyl methacrylate content of 5 to 25% by weight with the balance being styrene.

Component B is typically an ABS or methyl methacrylate-butadiene-styrene (MBS) type polymer, that is to say a diene rubber substrate grafted with styrene and either acrylonitrile, methyl methacrylate, methyl acrylate or a mixture of these monomers. However the rubber need not be the conventional polybutadiene or butadiene/styrene copolymer since any rubber with a glass transition temperature below 0°C, can be used. Such rubbers include EPDM rubber, polypentenamer, polyisoprene, polychloroprene and polyacrylate rubbers. The styrene may be replaced in whole or in part by other styrenic monomer such as described with reference to Component A above. The acrylonitrile may be replaced in whole or in part by methacrylonitrile.

Component C is a polycarbonate resin which is suitable for injection molding or extrusion. Such polycarbonates are well known in the art and are commercially available. A variety of such polycarbonates or polycarbonate blends are disclosed in the following U.S. Patent Nos. 3,649,712, 3,239,582, 3,742,088, 3,036,036 and 3,028,365.

In addition to the above components the polyblends of the invention can advantageously contain other additives such as plasticizers, antioxidants, stabilizers, flame-retardants, fibers, mineral fibers, dyes and pigments.

The components of the polyblend can be blended together by any convenient process. Usually however they are extrusion blended or compounded in a high intensity blender such as a Banbury Mixer. When using greater than about 30% by weight of Component A the use of extrusion blending is preferred.

Components A and B can be together provided by the formulations described in U.S. Patents 4,305,869 and 4,197,376 and then blended with Component C.

The invention is now described with reference to the following examples which are for the purposes of illustration only and are not intended to imply any limitation on the scope of the invention. The components described below are blended in a number of different ratios and tested for various properties.

Components used

ABS-1—prepared by the graft emulsion polymerization of styrene and acrylonitrile in a weight ratio of 70:30 in the presence of polybutadiene rubber. ABS-1 contains 38% by weight of polybutadiene rubber. The polybutadiene rubber consists of 93% polybutadiene and 7% acrylonitrile copolymer. The weight average molecular weight of the free (ungrafted) SAN in the styrene/acrylonitrile graft polymer is in the range from 200,000 to 400,000 as determined by gel permeation chromatography [GPC] using ASTM Method D 3536-76 modified in that 4 columns in series using micro Styragel (Waters Assoc.) packing are used with a nominal exclusion limit of 500A units, 1,000A units, 10,000A units and 100,000A units. The detector is an ultraviolet light detector set at wavelength 254nm. The test samples are prepared at a concentration of 0.25% weight of polymer in tetrahydrofuran. The sample injection size is 0.2 ml and a flow rate of 2 ml/min. at ambient temperature is used.

The grafted polybutadiene has an average particle size in the range of from 0.1 to 0.25 micrometer measured as a weight average particle size diameter with centrifugal photosedimentometer (CPSM) by the published procedure of Graves, M. J. et al *"Size Analysis of Subsieve Powders using a Centrifugal Photosedimentometer"*, British Chemical Engineering 9:742—744 (1964). A Model 3000 Particle Size Analyzer from Martin Sweets Co. 3131 W. Market St., Louisville, KY is used.

ABS-2—prepared by the graft suspension polymerization of styrene and acrylonitrile in a weight ratio of 72:28 in the presence of polybutadiene. ABS-2 contains 14% by weight of polybutadiene. The weight average molecular weight determined by GPC of the free SAN in the styrene/acrylonitrile graft polymer is in the range from 70,000 to 100,000 and the grafted polybutadiene has an average particle size in the range of from 0.6 to 1.6 micrometer by CPSM.

S/MA—a copolymer prepared by polymerizing a monomer mixture of styrene and maleic anyhydride to produce a composition in which the monomers are in the weight ratio of 76.9/23.1.

S/MA/MMA—a terpolymer prepared by polymerizing a monomer mixture of styrene, maleic anhydride and methyl methacrylate to produce a composition in which the monomers are in the weight ratio indicated.

S/MA/AN—a terpolymer prepared by polymerizing a monomer mixture of styrene, maleic anhydride and acrylonitrile to produce a composition in which the monomers are in the weight ratios indicated.

PC—a bisphenol A homopolycarbonate sold by Mobay Chemical Company under the tradename Merlon®M50.

Glycolube® TS—a glycerol tristearate plasticizers, available from Glyco.

Goodrite®3114—an alkylated phenol antioxidant available from Goodrich.

Sample preparation and test methods

The components used in the working examples are compounded in a Banbury mixer at 180 to 250°C. The resulting blends are injection molded on an Arburg Molding Machine at 220 to 270°C. and 3.44 to 13.8 MPa. The molded samples are subjected to the following tests:

VICAT Softening Point (ASTM-D-1525-76-Rate B) a one (1) kg test using a heat rate of 120°C. per hour with results given in °C.;

Izod Impact (ASTM D-256-56) with results given in Joules/Meter J/M, sample sizes 1.27×1.27 cm, 1.27×0.64 cm, and 1.27×0.32 cm; and

Multiaxial Inverted Dart Impact (IDI)—a modification of the test as described in Society of Plastics Engineers National Technical Conference *"Plastics in Surface Transportation"* Nov. 12—14, 1974 Detroit, Mich. page 238. In the modified test, instead of the dart being attached to the slider and striking the sample, the sample holder is attached to the slider and strikes the instrumented dart. The rotary potentiometer is not used. The instrumented dart used is 1.27 cm in diameter, and the sample strikes the instrumented dart at a velocity of 111.76 m/min. The samples are injection molded into 7.62 cm×10.16 cm×0.254 cm and then are cut into 3.81 cm×5.08 cm×0.254 cm pieces for testing. Results are given in Joules (J).

The energy to maximum is the energy needed to achieve the yielding of a ductile sample. The energy to failure represents the energy necessary to cause a failure of a sample. The test is run at 23°C and −20°C. to determine the effect of temperature on performance of the polymer. The difference (Δ between the energy to fail and the energy to maximum indicates the ductility of the sample and the difference increases with ductility.

TABLE I

SMA Terpolymer effects on SMA/ABS/PC polyblends

| | | C-1 | I-1 | I-2 | I-3 | I-4 | C-2 | C-3 |
|---|---|---|---|---|---|---|---|---|
| SMA Type | MA | 23.1 | 25.2 | 22.7 | 21.3 | 21.7 | 20.5 | 19.7 |
| | MMA | 0 | 6.3 | 10.5 | 17.9 | 22.9 | 0 | 0 |
| | AN | 0 | 0 | 0 | 0 | 0 | 7.0 | 10.7 |
| IZOD impact sample size | | | | | | | | |
| 1.27×1.27 cm | | 157 | 149 | 229 | 284 | 326 | 251 | 306 |
| 1.27×0.64 cm | | 478 | 397 | 582 | 702 | 719 | 587 | 506 |
| 1.27×0.32 cm | | 585 | 777 | 1247 | 1489 | 928 | 1146 | 757 |
| IDI fail (23°C) | | 14.4 | 31.4 | 34.9 | 37.2 | 35.0 | 40.9 | 43.3 |
| | max | 11.6 | 25.1 | 27.3 | 28.5 | 26.8 | 29.5 | 32.2 |
| | Δ | 2.8 | 6.3 | 7.6 | 8.7 | 8.2 | 11.4 | 11.1 |
| (−20°C) fail | | 4.97 | 15.1 | 16.3 | 13.1 | 15.4 | 29.0 | 34.2 |
| | max | 4.86 | 14.7 | 16.2 | 13.0 | 14.5 | 24.7 | 29.2 |
| | Δ | 0.11 | 0.4 | 0.1 | 0.1 | 0.9 | 4.3 | 5.0 |
| Vicat (°C) | | 132.9 | 134.8 | 134.3 | 133.8 | 132.4 | 133.8 | 134.2 |

Working examples and test results

In Controls C-1 to C-3 and Examples I-1 to I-4, various polyblends are prepared and tested and the results tabulated in Table 1. Control C-1 is included for comparison purposes. Controls C-2 and C-3 show the effect of using AN as a termonomer in the SMA. The polyblend formulation consists of 40% by weight PC, 30% by weight of the SMA polymer, 22.6% by weight ABS-1, 7.4% by weight ABS-2. All examples are prepared using 0.3% by weight Goodrite® 3114 and 2.5% by weight Glycolube®TS based on the total weight of polymeric components (A), (B) and (C).

Controls C-1 to C-3 and examples I-1 to I-4

Control Examples C-1 to C-3 and Examples I-1 to I-4 are tabulated in Table 1. Control example C-1 is a SMA copolymer (with no termonomer), ABS and PC polyblend. Examples I-1 to I-4 are made with SMAMMA terpolymer with MMA present from 6.3 wt % to 22.9 wt% of the terpolymer. Comparing C-1 to I-1, one can see that the Izod for the 1.27×1.27 cm and 1.27×0.64 cm sample decreases, while the Izod for the 1.27×0.32 cm sample increases. The IDI at 23°C values, however, more than double, and the IDI at −20°C. values more than triple. Therefore, an addition of 6.3 wt% in the terpolymer (less than 2% methyl methacrylate in the total polyblend) brings a remarkable increase in impact properties.

The improvement in Izod properties is even better illustrated by comparing Example I-2 to control Example C-1. The Izod values for each sample size show a marked increase. Likewise, the IDI values of Example I-2 are dramatically higher than those of Control Example C-1. Example I-2 also shows a further increase in impact properties over Example I-1. The Vicat of Example I-2 is about the same as that of I-1, an improvement over C-1.

The Izod values for the 1.27×1.27 cm and the 1.27×0.64 cm samples increase with increasing MMA, with an optimum not observed in the range tested. For the 1.27×0.32 cm sample, an optimum is observed at 17.9 wt % MMA (Example I-3). In the IDI values at −20°C., an optimum is observed at 10.5 wt % MMA (Example I-2) with an unexplained dip at 17.9 wt % MMA (Example I-3).

The Vicat varied only about 2°C over the samples tested with an optimum value at 6.3 wt % MMA.

Control examples C-2 and C-3 illustrate the use of AN as an SMA termonomer. Comparing control examples C-2 to C-1, it can be seen that all the performance values improve, with a marked improvement of 200 to 500% in IDI values.

# 0 135 492

**Claims**

1. A polyblend comprising:

A. from 5 to 70% by weight of a polymer of a vinylaromatic monomer and an unsaturated dicarboxylic acid anhydride monomer and a termonomer selected from the group consisting of $C_1$ to $C_3$ acrylates and methacrylates wherein the relative amounts of weight of the monomers in the polymer are 50 to 84% of the vinylaromatic monomer, 15 to 35% of the dicarboxylic acid anhydride and 1 to 25% of the termonomer; wherein the monomers are polymerized in the presence of 0 to 25% by weight of a rubber having a glass transition temperature below 0°C;

B. from 5 to 70% by weight of a grafted composition comprising a graft polymer of from 20 to 40 parts by weight of a monomer selected from the group consisting of methyl methacrylate and acrylonitrile and 80 to 60 parts by weight of a vinyl aromatic monomer the polymer being grafted onto a substrate rubber having a glass transition temperature below 0°C. wherein the monomers are polymerized in the presence of and grafted onto the substrate rubber, wherein the weight percent of the rubber is in the range from 5 to 60% by weight based on the weight of the composition, and

C. from 5 to 70% of polycarbonate; and wherein the weight percent for Components A, B, and C is based on the total amount of Components (A), (B), and (C) in the polyblend.

2. A polyblend as in Claim 1 wherein the $C_1$ to $C_3$ acrylates and methacrylates are in the range of 5 to 20% by weight of the terpolymer and the weight ratio of the polymer of vinyl aromatic monomer and dicarboxylic acid anhydride monomer to the grafted polymer composition is in the range from 20:80 to 80:20.

3. A polyblend as in Claim 1 wherein the $C_1$ to $C_3$ acrylates and methacrylates are in the range of 10 to 20% by weight of the terpolymer and the weight ratio of the polymer of vinyl aromatic monomer and dicarboxylic acid anhydride monomer to the grafted polymer composition is in the range from 20:80 to 80:20.

4. A polyblend as in Claim 1 wherein the $C_1$ to $C_3$ acrylates and methacrylates are in the range of 10 to 20% by weight of the terpolymer and the weight ratio of the polymer of vinyl aromatic monomer and dicarboxylic acid anhydride monomer to the grafted polymer composition is in the range from 30:70 to 70:30.

5. A polyblend as in Claim 1 wherein the $C_1$ to $C_3$ methacrylate is methyl methacrylate.

6. A polyblend as in Claim 1 wherein Component A is a styrene maleic anhydride polymer.

7. A polyblend as in Claim 1 wherein the grafted polymer of Component B is ABS.

8. A polyblend comprising:

A. from 5 to 70% by weight of a styrene maleic anhydride polymer comprising 50 to 84% by weight of styrene, 15 to 35% by weight of maleic anhydride and 1 to 25% by weight of a methyl methacrylate termonomer;

B. from 5 to 70% by weight of a graft polymer composition comprising a graft polymer of from 20 to 40 parts by weight of acrylonitrile or methyl methacrylate and 80 to 60 parts by weight of styrene, the polymer being grafted onto a butadiene rubber having a glass transition temperature below 0°C. wherein the monomers are polymerized in the presence of and grafted onto the substrate rubber, wherein the weight percent of the rubber is in the range from 5 to 60% by weight based on the weight of the composition, and

C. from 5 to 70% of polycarbonate; and wherein the weight ratio of the styrene maleic anhydride polymer to the grafted polymer composition is in the range of 80:20 to 20:80; and wherein the weight percent for Components (A), (B), and (C) is based on the total amount of Components (A), (B), and (C) in the polyblend.

9. A polyblend as in Claim 8 wherein the methyl methacrylate is present from 10 to 20% by weight of the terpolymer and the weight ratio of the polymer of styrene maleic anhydride polymer to the grafted polymer composition is in the range from 30:70 to 70:30.

10. A polyblend as in Claim 8 wherein the styrene maleic anhydride polymer contains 10 to 20% by weight of a methyl methacrylate termonomer and wherein the grafted polymer of Component B is ABS.

11. A polyblend according to Claim 8 comprising:

A. a styrene maleic anhydride methyl methacrylate terpolymer;

B. an ABS grafted polymer; and

C. polycarbonate.

12. A polyblend according to Claim 1 wherein the polymer of the vinyl aromatic monomer, the unsaturated dicarboxylic acid anhydride and the $C_1$ to $C_3$ acrylate or methacrylate of Component A is prepared by polymerizing the monomers in the presence of rubber component having a glass transition temperature below 0°C. to provide from 5 to 25% by weight of rubber in the polymer.

13. Molded and extruded articles prepared from a polyblend comprising:

A. from 5 to 70% by weight of a polymer of a vinylaromatic monomer and an unsaturated dicarboxylic acid anhydride monomer and a termonomer, selected from the group consisting of $C_1$ to $C_3$ acrylates and methacrylates, wherein the relative amounts by weight of the monomers in the polymer are 50 to 84% of the vinylaromatic monomer, 15 to 35% of the dicarboxylic acid anhydride and 1 to 25% of the termononer; and wherein the monomers are polymerized in the presence of 0 to 25% by weight of a rubber having a glass transition temperature below 0°C.;

5

**0 135 492**

B. from 5 to 70% by weight of a grafted polymer composition comprising a graft polymer of from 20 to 40 parts by weight of a monomer selected from the group consisting of methyl methacrylate and acrylonitrile and 80 to 60 parts by weight of a vinyl aromatic monomer, the polymer being grafted onto a substrate rubber having a glass transition temperature below 0°C. wherein the monomers are polymerized in the presence of and grafted onto the substrate rubber, wherein the weight percent of the rubber is in the range from 5 to 60% by weight based on the weight of the composition, and

C. from 5 to 70% of polycarbonate; and wherein the weight percent for Components (A), (B), and (C) is based on the total amount of Components (A), (B), and (C) in the polyblend.

**Patentansprüche**

1. Polymermischung aus

A) 5 bis 70 Gew.-% eines Polymeren aus einem aromatischen Vinylmonomer und einem ungesättigten Dicarbonsäureanhydridmonomer und einem Termonomer aus der $C_1$—$C_3$-Acrylate und -Methacrylate umfassenden Gruppe, wobeie die relativen Gewichtsmengen der Monomere im Polymer 50 bis 84% des aromatischen Vinylmonomeren, 15 bis 35% des Dicarbonsäureanhydrids und 1 bis 25% des Termonomeren betragen und die Monomere in Gegenwart von 0 bis 25 Gew.-% eines Kautschuks mit einer Glasumwandlungstemperatur unterhalb von 0°C polymerisiert werden;

B) 5 bis 70 Gew.-% einer gepfropften Masse, welche ein Pfropfpolymer aus 20 bis 40 Gew.-Teilen eines Monomeren aus der Methylmethacrylat und Acrylnitril umfassenden Gruppe und 80 bis 60 Gew.-Teilen eines aromatischen Vinylmonomeren umfaßt, wobei das Polymer auf ein Kautschuksubstrat mit einer Glasumwandlungstemperatur unterhalb von 0° gepfropft wird, indem die Monomere in Gegenwart des Kautschuksubstrats polymerisiert und auf das Kautschuksubstrat gepfropft werden und der Kautschuk in einem Gewichtsprozentbereich von 5 bis 60 Gew.-%, bezogen auf das Gewicht der Masse, liegt; und

C) 5 bis 70 % eines Polycarbonats, wobei die Gewichtsprozente der Bestandteile A, B und C auf die Gesamtmengen der Bestandteile (A), (B) und (C) in der Polymerischung bezogen sind.

2. Polymerischung nach Anspruch 1, dadurch gekennzeichnet, daß die $C_1$—$C_3$-Acrylate und -Methacrylate im Terpolymer in einem Bereich von 5 bis 20 Gew.-% vorliegen und das Gewichtsverhältnis des Polymeren aus dem aromatischen Vinylmonomer und dem Dicarbonsäureanhydrid zu der gepropften Polymermasse in einem Bereich von 20:80 bis 80:20 liegt.

3. Polymermischung nach Anspruch 1, dadurch gekennzeichnet, daß die $C_1$—$C_3$-Acrylate und -Methacrylate im Terpolymer in einen Bereich von 10 bis 20 Gew.-% vorliegen und das Gewichtsverhältnis des Polymeren aus dem aromatischen Vinylmonomer und dem Dicarbonsäureanhydrid zu der gepfropften Polymermasse in einen Bereich von 20:80 bis 80:20 liegt.

4. Polymermischung nach Anspruch 1, dadurch gekennzeichnet, daß die $C_1$—$C_3$-Acrylate und -Methacrylate im Terpolymer in einem Bereich von 10 bis 20 Gew.-% vorliegun und das Gewichtsverhältnis des Polymeren aus dem aromatischen Vinylmonomer und dem Dicarbonsäureanhydrid zu der gepfropften Polymermasse in einen Bereich von 30:70 bis 70:30 liegt.

5. Polymermischung nach Anspruch 1, dadurch gekennzeichnet, daß das $C_1$—$C_3$-Methacrylat Methylmethacrylat ist.

6. Polymermischung nach Anspruch 1, dadurch gekennzeichnet, daß der Bestandteil A ein Styrol-Maleinsäureanhydrid-Polymer ist.

7. Polymermischung nach Anspruch 1, dadurch gekennzeichnet, daß gepfropfte Polymer des Bestandteils B ein ABS-Polymer ist.

8. Polymermischung aus

A) 5 bis 70 Gew.-% eines Styrol-Maleinsäureanhydrid-Polymeren, das 50 bis 84 Gew.-% Styrol, 15 bis 35 Gew.-% Maleinsäureanhydrid und 1 bis 25 Gew.-% eines Methylmethacrylat-Termonomeren umfaßt,

B) 5 bis 70 Gew.-% einer Pfropfpolymermasse, die ein Pfropfpolymer aus 20 bis 40 Gew.-Teilen Acrylnitril oder Methylmethacrylat und 80 bis 60 Gew.-Teilen Styrol umfaßt, wobei das Polymer auf einen Butadienkautschuk mit einer Glasumwandlungstemperatur unterhalb von 0°C gepfropft wird, indem die Monomere in Gegenwart des Kautschuksubstrats polymerisiert und auf das Kautschuksubstrat gepfropft werden und die Gewichtsprozente des Kautschuks in einem Bereich von 5 bis 60 Gew.-%, bezogen auf das Gewicht der Masse, liegen und

C) 5 bis 70 % eines Polycarbonats, wobei das Gewichtsverhältnis des Styrol-Maleinsäureanhydrid-Polymeren zu der gepfropften Polymermasse in einem Bereich von 80:20 bis 20:80 liegt und die Gewichtsprozente der Bestandteile (A), (B) und (C) auf die Gesamtmenge der Bestandteile (A), (B) und (C) in der Polymermischung bezogen sind.

9. Polymermischung nach Anspruch 8, dadurch gekennzeichnet, daß das Methylmethacrylat in einer Menge von 10 bis 20 Gew.-% im Terpolymer vorhanden ist und das Gewichtsverhältnis des Polymeren aus dem Styrol-Maleinsäureanhydrid-Polymer zu der gepfropften Polymermasse in einem Bereich von 30:70 bis 70:30 liegt.

10. Polymermischung nach Anspruch 8, dadurch gekennzeichnet, daß das Styrol-Maleinsäureanhydrid-Polymer 10 bis 20 Gew.-% eines Methylmethacrylat-Termonomeren enthält, wobei das gepfropfte Polymer des Bestandteils (B) ein ABS-Polymer ist.

6

# 0 135 492

11. Polymermischung nach Anspruch 8, aus

A) einem Styrol-Maleinsäureanhydrid-Methylmethacrylat-Terpolymer,

B) einem gepfropften ABS-Polymer und

C) einem Polycarbonat.

12. Polymermischung nach Anspruch 1, dadurch gekennzeichnet, daß das Polymer aus dem aromatischen Vinylmonomer, dem ungesättigten Dicarbonsäureanhydrid und den $C_1$—$C_3$-Acrylaten oder -Methacrylaten des Bestandteils A durch Polymerisation der Monomeren in Gegenwart eines Kautschuks mit einer Glasumwandlungstemperatur unterhalb von 0°C und einer Menge von 5 bis 25 Gew.-Teilen im Polymer hergestellt ist.

13. Geformte und extrudierte Formstücke aus einer Polymermischung aus

A) 5 bis 70 Gew.-% eines Polymeren aus einem aromatischen Vinylmonomer und einen ungesättigten Dicarbonsäureanhydridmonomer und einem Termonomer aus der aus $C_1$—$C_3$-Arylaten und -Methacrylaten bestehenden Gruppe, wobei die relativen Gewichtsmengen der Monomeren im Polymer 50 bis 84 % des aromatischen Vinylmonomeren, 15 bis 35 % des Dicarbonsäureanhydrids und 1 bis 25 % des Termonomeren betragen, und die Monomere in Gegenwart von 0 bis 25 Gew.-% eines Kautschuks mit einer Glasumwandlungstemperatur unterhalb von 0°C polymerisiert werden,

B) 5 bis 70 Gew.-% einer gepfropften Polymermasse, die ein Pfropfpolymer aus 20 bis 40 Gew.-Teilen eines Monomeren aus der aus Methylmethacrylat und Acrylnitril bestehenden Gruppe und 80 bis 60 Gew.-Teilen eines aromatischen Vinylmonomeren umfaßt, wobei das Polymer auf ein Kautschuksubstrat mit einer Glasumwandlungstemperatur unterhalb von 0°C gepfropft wird, indem die Monomere in Gegenwart des Kautschuksubstrats polymerisiert und auf das Kautschuksubstrat gepfropft werden und der Kautschuk in einem Gewichtsprozentbereich von 5 bis 60 Gew.-%, bezogen auf die Masse, vorliegt und

C) 5 bis 70 % eines Polycarbonats, wobei die Gewichtsprozente der Bestandteile (A), (B) und (C) auf das Gesamtgewicht der bestandteile (A), (B) und (C) in der Polymermischung bezogen sind.

## Revendications

1. Polymélange comprenant:

A. de 5 à 70 % en poids d'un polymère d'un monomère vinylaromatique et d'un anhydride d'acide dicarboxylique insaturé monomère et d'un termonomère choisi parmi les acrylates et méthacrylates en $C_1$ à $C_3$, dans lequel les proportions relatives du poids des monomères dans le polymère sont de 50 à 84 % du monomère vinylaromatique, de 15 à 35 % de l'anhydride d'acide dicarboxylique et de 1 à 25% du termonomère; dans lequel les monomères sont polymérisés en présence de 0 à 25% en poids d'un caoutchouc ayant une température de transition vitreuse inférieure à 0°C;

B. de 5 à 70% enpoids d'une composition greffée comprenant un polymère greffé de 20 à 40 parties en poids d'un monomère choisi parmi le méthacrylate de méthyle et l'acrylonitrile et 80 à 60 parties en poids d'un monomère vinylaromatique, le polymère étant greffé sur un caoutchouc de substrat ayant une température de transition vitreuse inférieure à 0°C, dans lequel les monomères sont polymérisés en présence d'un caoutchouc de substrat et greffés sur celui-ci, dans lequel le pourcentage pondéral du caoutchouc est dans l'intervalle de 5 à 60 % en poids par rapport au poids de la composition, et

C. de 5 à 70% de polycarbonate, et dans lequel le pourcentage pondéral des constituants A, B et C est basé sur la quantité totale des constituants (A), (B) et (C) dans le polymélange.

2. Polymélange selon la revendication 1, dans lequel les acrylates et méthacrylates et $C_1$ à $C_3$ sont dans l'intervalle de 5 à 20% en poids du terpolymère et le rapport pondéral du polymère du monomère vinylaromatique et de l'anhydride d'acide dicarboxylique monomère à la composition de polymère greffé est dans l'intervalle de 20:80 à 80:20.

3. Polymélange selon la revendication 1, dans lequel les acrylates et méthacrylates en $C_1$ à $C_3$ sont dans l'intervalle de 10 à 20 % en poids du terpolymère et le rapport pondéral du polymère du monomère vinylaromatique et de l'anhydride d'acide dicarboxylique monomère à la composition de polymère greffé est dans l'intervalle de 20:80 à 80:20.

4. Polymélange selon la revendication 1, dans lequel les acrylates et méthacrylates en $C_1$ à $C_3$ sont dans l'intervalle de 10 à 20 % en poids du terpolymère et le rapport pondéral du polymère de monomère vinylaromatique et d'anhydride d'acide dicarboxylique monomère à la composition de polymère greffé est dans l'intervalle de 30:70 à 70:30.

5. Polymélange selon la revendication 1, dans lequel le méthacrylate en $C_1$ à $C_3$ est le méthacrylate de méthyle.

6. Polymélange selon la revendication 1, dans lequel le constituant A est un polymère styrène/ anhydride maléique.

7. Polymélange selon la revendication 1, dans lequel le polymère greffé du constituant B est l'ABS.

8. Polymélange comprenant:

A. de 5 à 70% en poids d'un polymère styrène/anhydride maléique comprenant 50 à 84% en poids de styrène, 15 à 35 % enpoids d'anhydride maléique et 1 à 25 % en poids de méthacrylate de méthyle comme termonomère;

B. de 5 à 70 % en poids d'une composition de polymère greffé comprenant un polymère greffé de 20 à 40 parties en poids d'acrylonitrile ou de méthacrylate de méthyle et 80 à 60 parties en poids de styrène, le

7

polymère étant greffé sur un caoutchouc de butadiène ayant une température de transition vitreuse inférieure à 0°C, dans lequel les monomères sont polymérisés en présence d'un caoutchouc de substrat et greffés sur celui-ci, dans lequel le pourcentage pondéral du caoutchouc est dans l'intervalle de 5 à 60 % en poids par rapport au poids de la composition, et

C. de 5 à 70 % de polycarbonate; et dans lequel le rapport pondéral du polymère styrène/anhydride maléique à la composition de polymère greffé est dans l'intervalle de 80:20 à 20:80; et dans lequel le pourcentage pondéral pour les constituants (A), (B) et (C) est basé sur la quantité totale des constituants (A), (B) et (C) dans le polymélange.

9. Polymélange selon la revendication 8, dans lequel le méthacrylate de méthyle est présent à raison de 10 à 20 % en poids du terpolymère et le rapport pondéral du polymère styrène/anhydride maléique à la composition de polymère greffé est dans l'intervalle de 30:70 à 70:30.

10. Polymélange selon la revendication 8, dans lequel le polymère styrène/anhydride maléique contient 10 à 20 % en poids de méthacrylate de méthyle comme termonomère et dans lequel le polymère greffé du constituant B est l'ABS.

11. Polymélange selon la revendication 8, comprenant:
A. un terpolymère styrène/anhydride maléique/méthacrylate de méthyle;
B. un polymère ABS greffé; et
C. un polycarbonate.

12. Polymélange selon la revendication 1, dans lequel le polymère du monomère vinylaromatique, de l'anhydride d'acide dicarboxylique insaturé et de l'acrylate ou du méthacrylate en $C_1$ à $C_3$ du constituant A est préparé en polymérisant les monomères en présence d'un constituant caoutchouc ayant une température de transition vitreuse inférieure à 0°C pour donner de 5 à 25 % en poids de caoutchouc dans le polymère.

13. Articles moulés et extrudés préparés à partir d'un polymélange comprenant:
A. de 5 à 70 % en poids d'un polymère d'un monomère vinylaromatique et d'un anhydride d'acide dicarboxylique insaturé monomère et d'un termonomère choisi parmi les acrylates et méthacrylates en $C_1$ à $C_3$, dans lequel les quantités pondérales relatives des monomères dans le polymère.sont de 50 à 84 % du monomère vinylaromatique 15 à 35 % de l'anhydride d'acide dicarboxylique et 1 à 25 % du termonomère; et dans lequel les monomères sont polymérisés en présence de 0 à 25 % en poids d'un caoutchouc ayant une températur de transition vitreuse inférieure à 0°C;
B. de 5 à 70 % enpoids d'une composition de polymère greffé comprenant un polymère greffé de 20 à 40 parties en poids d'un monomère choisi parmi le méthacrylate de méthyle et l'acrylonitrile et de 80 à 60 parties en poids d'un monomere vinylaromatique, le polymère étant greffé sur un caoutchouc de substrat ayant une température de transition vitreuse inférieure à 0°C, dans lequel les monomères sont polymérisés en présence du caoutchouc de substrat et greffés sur celui-ci, dans lequel le pourcentage pondéral du caoutchouc est dans l'intervalle de 5 à 60 % en poids par rapport au poids de la composition, et
C. de 5 à 70 % de polycarbonate; et dans lequel le pourcentage pondéral des constituants (A), (B) et (C) est basé sur la quantité totale des constituants (A), (B) et (C) dans le polymélange.